Europäisches Patentamt

European Patent Office

Office européen des brevets

(19)

(11) Veröffentlichungsnummer : **0 218 877**
**B1**

(12) # EUROPÄISCHE PATENTSCHRIFT

(45) Veröffentlichungstag der Patentschrift :
13.12.89

(51) Int. Cl.⁴ : **A 61 C   5/04**

(21) Anmeldenummer : 86112064.0

(22) Anmeldetag : 01.09.86

(54) Gerät zur Füllung von Zahnkavitäten.

(30) Priorität : 19.09.85 DE 3533367

(43) Veröffentlichungstag der Anmeldung :
22.04.87 Patentblatt 87/17

(45) Bekanntmachung des Hinweises auf die Patenterteilung : 13.12.89 Patentblatt 89/50

(84) Benannte Vertragsstaaten :
AT BE CH DE FR GB IT LI LU NL SE

(56) Entgegenhaltungen :
WO-A-83/022 22
DE-C- 2 364 547
US-A- 3 221 409
US-A- 3 552 021
US-A- 3 623 224
US-A- 3 792 530
US-A- 3 816 922

(73) Patentinhaber : **Hirdes, Rüdiger, Dr. med. dent.**
**Kleinherbeder Strasse 9 a**
**D-5810 Witten (DE)**

(72) Erfinder : **Hirdes, Rüdiger, Dr. med. dent.**
**Kleinherbeder Strasse 9 a**
**D-5810 Witten (DE)**

(74) Vertreter : **Eichelbaum, Lambert, Dipl.-Ing.**
**Krüppeleichen 6**
**D-4350 Recklinghausen (DE)**

## Beschreibung

Die Erfindung betrifft ein Gerät zur Füllung von Zahnkavitäten mit Füllstoffen, z. B. mit Amalgam, welches einen Füllstutzen und eine in einem Führungskanal hin- und herzubewegende, in den Füllstutzen übergehende Füll-Schubachse sowie ein quer zum Füllstutzen angeordnetes, in ihn einmündendes sowie herausnehmbares Wechselmagazin aufweist, aus dem über eine in einem zweiten Führungskanal geführte Magazin-Schubachse zu Beginn des oberhalb der Einmündung des Wechselmagazins beginnenden und am Ausgang des Füllstutzens endenden Arbeitshubes der Füll-Schubachse ein Teil des Füllstoffes in den Füllstutzen zu drücken ist, wobei die von einem gemeinsamen Gehäuse umgebene Füll- und Magazin-Schubachse durch ein ihre Bewegung zueinander koordinierendes, mechanisches Getriebe miteinander gekoppelt sind, zu dem eine mit der Magazin-Schubachse verbundene Zahnstange gehört.

Ein bekanntes Gerät dieser Art nach der DE-PS 23 64 547 ist einerseits durch ein von einer Kraftquelle antreibbares mechanisches Getriebe und andererseits durch einen von einer Preßluftquelle in Tätigkeit zu setzenden pneumatischen Antrieb gekennzeichnet. Neben seinem komplizierten Aufbau ist somit das vorbekannte Gerät jeweils abhängig von einer mit ihm über eine Verbindungsleitung anschließbaren Energiequelle. Durch die Verbindungsleitung wird die Ergonomie und die Handhabungsfähigkeit des Gerätes empfindlich beeinträchtigt, wohingegen die Notwendigkeit einer Energiequelle den Wirkungsbereich eines solchen Gerätes auf eine ärztliche Praxis beschränkt. Und schließlich muß auch bei diesem Gerät nach dem Leeren des Wechselmagazins entweder rasch ein neues Wechselmagazin eingesetzt oder die Behandlung mit einem zweiten Gerät fortgesetzt werden.

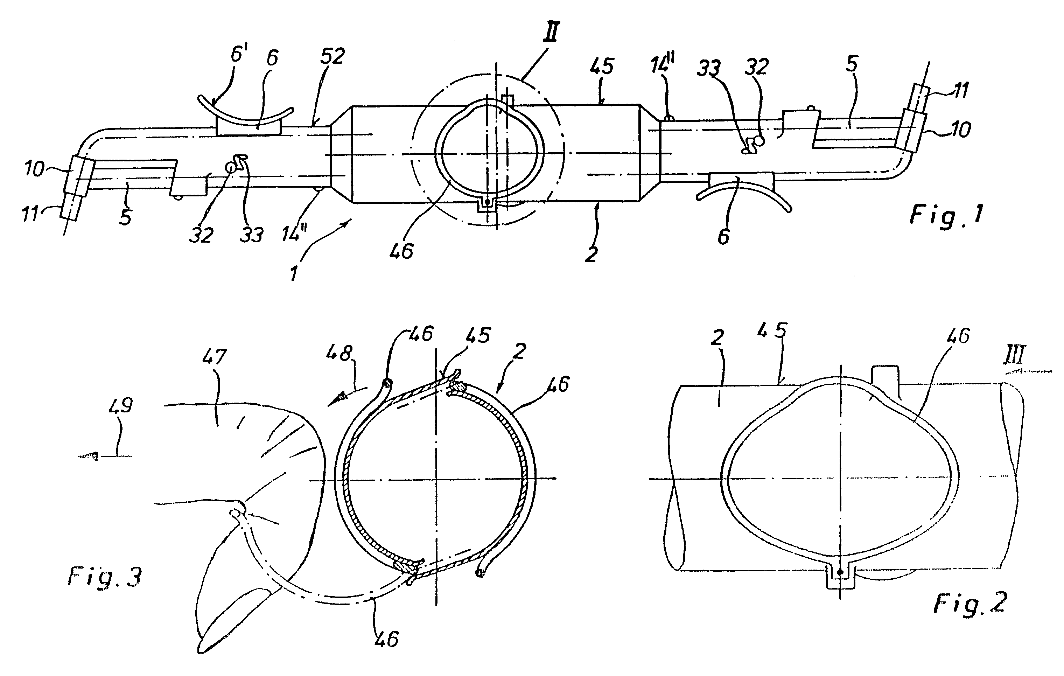

Aus der US-A-3 792 530 ist ein weiteres Gerät anderer Art bekannt geworden, welches eine mit relativ weitem Spiel in einem Führungskanal geführte Füll-Schubachse mit einem an ihrem vorderen Ende angeordneten Kolben sowie eine in einem zweiten Führungskanal geführte Magazin-Schubachse mit einem weiteren Kolben aufweist. Die Füll-Schubachse und die Magazin-Schubachse stehen an ihrem hinteren Ende jeweils unter der Wirkung der Kraft je einer Feder. Von diesen Federn hat die eine die Aufgabe, den Kolben der Füll-Schubachse in eine vom Füllstutzen zurückgezogene Lage innerhalb des Innenraumes einer Bohrung zu halten, bis ein das hintere Ende der Füll-Schubachse hintergreifender Schieber manuell vorwärts bewegt wird. Der anderen Feder kommt die Aufgabe zu, Füllmaterial aus einem als Reservebehälter dienenden zweiten Führungskanal in den oberen Hohlraum des Füllstutzens zu drücken. Das hintere Ende der Magazin-Schubachse ist mit einer Zahnstange versehen, die sich mit einer am hinteren Ende des Schiebers angeordneten Knagge in Eingriff befindet, wodurch die Bewegung der Magazin-Schubachse solange verhindert wird, bis die Füll-Schubachse durch Lösen des Fingerdruckes auf den Schieber unter der Wirkung ihrer Feder zurückgezogen wird. Das Zurückziehen der Magazin-Schubachse zum erneuten Füllen des Magazins, welches hier hälftig als entfernbares Klappmagazin ausgebildet ist, erfolgt über einen sich durch das Gehäuse hindurch erstreckenden Schieber, über den entgegen der auf die Magazin-Schubachse wirkenden Feder der Rückzug erfolgt. Bei diesem Gerät sind die Bewegungen und die Bewegungsabläufe der Magazin-Schubachse einerseits und der Füll-Schubachse andererseits lediglich über die Knagge miteinander gekoppelt. Beim Vorschieben des Schiebers gemäß Fig. 3 dieser Vorveröffentlichung wird über einen Vorsprung am hinteren Ende der Füll-Schubachse ein schwenkbarer Schubhebel entgegengesetzt der Uhrzeigerrichtung verschwenkt, so daß eine am hinteren Ende der Magazin-Schubachse angeordnete Zahnstange entgegen der Kraft der auf sie einwirkenden Feder zurückgeschoben wird. Wenn nunmehr der Schubhebel die Füll-Schubachse mit ihrer vorderen Spitze nach vorne schiebt, kann das Amalgam in die einmündende Öffnung des rohrförmigen Gliedes des Klappmagazins zurückgedrückt werden, da die in diesem Rohrglied befindliche Amalgammenge nicht mehr unter der Spannung der Feder der Magazin-Schubachse noch unter einer anderen Vorschubkraft steht.

Die auf die Magazin-Schubachse einwirkende Feder verringert ihre Vorspannung mit sich entleerendem Magazin, wodurch entsprechend degressiv die von der Magazin-Schubachse in den Füllstutzen gedrückten Amalgamportionen abnehmen. Dabei muß die Vorspannung dieser Magazin-Schubachse relativ groß bemessen werden, wodurch wiederum der Schieber aufgrund der Knaggen-Kopplung zwischen Füll-Schubachse und Magazin-Schubachse gegen eine relativ große Kraft zweier vorgespannter Federn vorgeschoben werden muß.

Schließlich trägt dieses Gerät den Eigenschaften des heute am meisten gebrauchten Füllungsmaterials in Form eines Silber-Amalgams nicht Rechnung, da dieses Material in etwa 5 bis 7 Minuten nach dem Anmischvorgang seine Plastizität verliert, so daß innerhalb dieses kurzen Zeitraumes der Füllvorgang beendet sein muß. Hieran schließt sich eine Aushärtungszeit von mehreren Stunden an. Daraus folgt, daß das hier in Rede stehende Amalgam während seiner Plastizitätsdauer von etwa 5 Minuten in ein entsprechendes Füllgerät eingebracht, von diesem Füllgerät in die Zahnkavität ausgetragen sowie verteilt und kondensiert werden muß.

Da sich in dem Klappmagazin der US-A-3 792 530 nach dem Vorschieben des hinterschnittenen Kolbens der Magazin-Schubachse eine ausgehärtete Amalgam-Tapete befindet, muß ebenso wie bei dem entsprechend ausgebildeten vorderen Ende der Füll-Schubachse ein Zurückziehen der beiden Achsen zwangsläufig auf Hindernisse stoßen.

Bei einem Gerät anderer Gattung nach der US-A-3 816 922 ist auch bereits ein einarmiger in Richtung beider Schubachsen betätigbarer Schwenkhebel bekannt, der weitere Schwenkhebel in Bewegung setzt, die einerseits auf die Magazin-Schubachse und andererseits auf die Füll-Schubachse einwirken. Die Bewegung dieses einarmigen Betätigungshebels erfolgt stets entgegen der Kraft von mindestens vier Federn und zwei einer unmittelbar an ihm angreifenden Rückholfeder, einer Rückholfeder für die an der Zahnstange der Magazin-Schubachse angreifenden Sperrklinke und zwei weiteren Rückholfedern, die über ein aufwendiges mechanisch-pneumatisches Getriebe einwirken und auf den einarmigen Betätigungshebel rückwirken. Da bei voranschreitender Verschwenkung des Betätigungshebels die Vorspannung und damit die Reaktionskräfte der vorgenannten vier Federn ansteigen und ein einarmiger Hebel ein erheblich größeres Moment als ein mehrarmiger Hebel erfordert, ist die vorbekannte Ausbildung sowohl in ergonomischer als auch in mechanischer Hinsicht mit mehreren Nachteilen behaftet.

Und schließlich ist aus der US-A-3 221 409 ein Gerät anderer Art bekannt geworden, bei dem eine in eine Zahnstange einer Füll-Schubachse eingreifende Blattfeder mittels eines relativ großzügig bemessenen Kniehebels eine Füll-Schubachse in einem nach dem Prinzip eines Injektionsgerätes aufgebauten Gehäuses vorschiebt und dabei Amalgam aus einem am vorderen Ende des Injektionsgerätes kuppel- sowie auswechselbaren Füllstutzen herausdrückt. Dieses Gerät ist allenfalls zum Austragen des Amalgams, nicht jedoch zur Kondensation einzelner, kleiner ausgetragener Amalgamportionen geeignet, da sich zwischen dem vorderen Ende der Füll-Schubachse und dem zu kondensierenden Amalgam stets noch weiteres, nicht ausgetragenes Amalgam im Füllstutzen befindet. Da außerdem über die gesamte Amalgamsäule zwischen vorderem Ende des Füllstutzens und der Austragungsöffnung des Füllstutzens stets Druckkräfte ausgeübt werden, tritt eine Vorkondensation und wegen des dann erfolgenden Austrittes an Quecksilber eine rasche Aushärtung ein. Diese wiederum ist mit einer unmittelbaren Vorhärtung und einem entsprechenden Festsetzen des Amalgams im Füllstutzen verbunden.

Von diesem Stand der Technik ausgehend liegt der Erfindung die Aufgabe zugrunde, ein Gerät der eingangs genannten Gattung zu schaffen, welches bei ergonomisch günstiger Handhabung und einfachem mechanischem Aufbau lediglich mittels eines Fingers betätigbar ist und durch welches kleine, jederzeit für sich getrennt sowie gleichmäßig kondensierbare Portionen unter Vermeidung einer Vorhärtung im Magazin rasch austragbar sind.

Diese Aufgabe wird in Verbindung mit den Merkmalen des eingangs genannten Gattungsbegriffes erfindungsgemäß dadurch gelöst, daß das mechanische Getriebe aus einem an dem Gehäuse schwenkbeweglich angelenkten Schubhebel besteht, der mit seinem freien Ende unter Federvorspannung in die Zahnstange eingreift und diese während eines Arbeitshubes über einen mit der Füll-Schubachse verbundenen, fingerbetätigten Schiebeknopf und einen Vorsprung der Füll-Schubachse in Richtung auf den Füllstutzen verschiebt, bevor das vordere Ende der Füll-Schubachse die Oberkante der Einmündung des Wechselmagazins in den Füllstutzen erreicht. Durch diese Ausbildung wird einerseits der von dem fingerbetätigten Schiebeknopf gleichzeitig ausgelöste Vorschub der Füll-Schubachse und der Magazin-Schubachse derart · über einen an dem Gehäuse schwenkbeweglich angeordneten Schubhebel koordiniert, daß die Magazin-Schubachse bereits die gewünscht kleine, keinen eine Vorhärtung auslösenden Druckkräften unterworfene Amalgamportion zu einem Zeitpunkt in den Füllstutzen gedrückt hat, wenn die Füll-Schubachse zwar bereits ihren Arbeitshub begonnen, jedoch noch nicht die Oberkante der Einmündung des Wechselmagazins in den Füllstutzen erreicht hat und somit auch nicht die Austragung der kleinen Amalgamportion in den Füllstutzen behindert. Dabei verschiebt vorteilhaft der Schubhebel während eines Arbeitshubes der Füll-Schubachse die Magazin-Schubachse um eine Strecke, die dem Durchmesser des Füllstutzens entspricht, der wiederum etwa gleich einer oder etwa gleich einem ganzteiligen Vielfachen der Zahnteilung der Zahnstange ist.

Nach einer ersten, besonders vorteilhaften Ausführungsalternative besteht der Schubhebel aus einer Schubkurbel, deren Schubstangenhebel mit seinem freien Ende in die Zahnstange eingreift und deren Kurbelhebel am Gehäuse schwenkbeweglich angelenkt ist, wobei der Vorsprung der Füll-Schubachse in der Nähe eines die beiden Hebel verbindenden Gelenkes am Kurbelhebel und/oder am Schubstangenhebel angreift. Grundsätzlich kann der über die Füll-Schubachse betätigbare sowie von ihr ausgehende Vorsprung an dem gelenkig verbundenen Ende des Schubstangenhebels oder an dem dort endenden Ende des Kurbelhebels oder an beiden Enden gleichzeitig angreifen. Um bei jedem Vorschub des Schiebeknopfes zugleich auch die Magazin-Schubachse um eine gewünschte bestimmte Strecke vorwärts zu schieben und damit eine entsprechende Amalgamportion automatisch aus dem Wechselmagazin auszutragen, steht der Schubstangenhebel unter der Wirkung einer Rückholfeder, die ihn bei Nachlassen bzw. bei Aufhebung der Wirkung des Vorsprunges der Füll-Schubachse um mindestens eine Zahnteilung in Richtung des Kurbelhebels zurückzieht und sein freies Ende wiederum in eine Zahnlücke der Zahnstange einrückt. Da diese Rückholfeder bei vorgeschobener Füll-Schubachse lediglich eine Spannung aufweisen muß, die zum Rückzug und zum erneuten Einrasten des äußerst leicht ausbildbaren Schubstangenhebels ausreicht, wird durch diese Feder die Vorschubbewegung des Schiebeknopfes im Gegensatz zu den vorbeschriebenen Ausführungsformen nach dem Stand der Technik in keinem nennenswerten Maße beeinträchtigt.

Nach einer zweiten vorteilhaften Ausführungsalternative besteht der Schubhebel aus einer Blattfeder, die mit ihrem einen Ende am Gehäuse unbeweglich befestigt ist, mit ihrem freien Ende in die Zahnstange eingreift, unter Wirkung des Vorsprunges der Füll-Schubachse die Zahnstange verschiebt und bei Nachlassen bzw. bei Aufhebung der Wirkung des Vorsprunges mit ihrem freien Ende unter Wirkung ihrer Eigenspannung um mindestens eine Zahnteilung in ihre Ausgangslage zurückfedert. Diese Ausführungsform zeichnet sich durch eine besonders einfache Ausbildung einer einseitig am Gehäuse eingespannten Blattfeder aus, wodurch der zuvor beschriebene, dreiteilige Schubhebel auf eine einteilige Ausführungsform zusammenschrumpft.

Um bei beiden Ausführungsformen das Wechselmagazin rasch gegen ein neues, gefülltes Wechselmagazin austauschen zu können, weist jeder Schubhebel einen Rastvorsprung ·auf, der durch eine im wesentlichen Z-förmige Öffnung des Gehäuses greift und über den der Schubhebel bei zurückgezogener Füll-Schubachse aus der Verzahnung der Zahnstange ausrastbar ist. Dadurch kann die Magazin-Schubachse in jeder x-beliebigen Stellung vom Schubhebel entkoppelt und zurückgeschoben werden.

Aufgrund seines einfachen, vorbeschriebenen Aufbaues ist das neue Gerät insbesondere auch in Verbindung mit einem Vibrator betätigbar, der die Qualität der Kondensation aufgrund gleichmäßiger Vibrationsschläge auf jede einzelne ausgetragene Amalgamportion beträchtlich erhöht und damit für eine strukturdichtere sowie gleichmäßige Amalgamkondensation innerhalb der Kavität sorgt. Zu diesem Zweck ist das vordere Ende der Füll-Schubachse am Ende ihres Arbeitshubes über den Schiebeknopf um eine geringe Strecke in eine Extremlage weiter verschiebbar, in welcher selbsttätig ein auf das hintere Ende der Füll-Schubachse wirkender Vibrator auslösbar ist.

Nach einer ersten vorteilhaften Ausführungsform besteht der Vibrator aus einem von einer per Hand aufziehbaren Antriebsfeder antreibbaren Federmotor, einer von diesem in Drehungen versetzbaren Nockenscheibe und einem mit letzterer in Eingriff befindlichen, unter Wirkung einer Rückholfeder gegen das Ende der Füll-Schubachse anliegenden, daran schwenkbeweglich befestigten Hämmerchen, welches in der Extremlage der Füll-Schubachse aus einer Verriegelung ausrückbar ist. Dabei ist vorteilhaft die Verriegelung als Zahnleisten am Innenrand einer Trommel hergestellt, die an ihrem der Füll-Schubachse zugekehrten Ende die Nockenscheibe aufweist und an ihrem anderen Ende mit dem Federmotor versehen ist. Die Antriebsfeder des Federmotors ist mittels eines am Außenmantel des Gerätes ergonomisch anliegenden sowie abklappbaren Ringes über eine mittels eines Federwerkes selbsttätig aufrollbare Schnur aufziehbar:

Es ist jedoch auch möglich, den Vibrator als einen von einer elektrischen Stromquelle gespeisten Ultra-Schall-Vibrator auszubilden.

Zwar ist aus der US-A-3 792 530 bereits ein auf die Füll-Schubachse wirkender Vibrator bekannt geworden, der jedoch über den dort offenbarten Schieber ständig mit der Füll-Schubachse verbunden und mit dieser gemeinsam bei jedem Arbeitshub vorund wieder zurückgeschoben werden muß, was wiederum aufgrund der dadurch bedingten Massenerhöhung die Ergonomie und damit die Handhabung dieses Gerätes verschlechtert.

Im Sinne der Aufgabenstellung wird die Handhabung des neuen Gerätes erheblich dadurch heraufgesetzt, daß es spiegelsymmetrisch mit zwei voneinander getrennten, unterschiedlich kalibrierten Füll- und Magazin-Schubachsen versehen ist, die an einem gemeinsamen Gehäuse befestigt sind. Dadurch ist der Zahnarzt in der Lage, zunächst das kleinkalibrige Arbeitsende für die kleineren Stufenbereiche mehrflächiger Zahnfüllungen einzusetzen und lediglich durch einfache Wendung des Füllgerätes um 180° — wie von doppelendigen Handinstrumenten her gewohnt — für den großräumigeren Kauflächenbereich ohne Zeitverlust das großkalibrige Arbeitsende zu verwenden.

Der Schiebeknopf weist vorteilhaft eine dem Zeigefinger einer Bedienungsperson ergonomisch angepaßte Fläche zum Vor- und Rückschub der Füll-Schubachse auf und ist an der von der Magazin-Schubachse abgewandten Seite der Füll-Schubachse angeordnet. Dabei kann bei Kondensation ohne Vibrator der Druck des ohnehin dann an günstigster Stelle gelegenen Zeigefingers ausgenutzt werden.

Mehrere Ausführungsbeispiele des neuen Gerätes sind in den Zeichnungen dargestellt. Dabei zeigen :

Fig. 1 : Die Seitenansicht des neuen Gerätes,

Fig. 2 : die Ausschnittsvergrößerung II von Fig. 1,

Fig. 3 : die Handhabung des abklappbaren Ringes zum Aufzug der Antriebsfeder des Federmotors in Richtung des Pfeiles III von Fig. 2,

Fig. 4 : einen teilweisen Längsschnitt durch den linken Teil des Gerätes von Fig. 1 mit einem als Schubkurbel ausgebildeten Schubhebel,

Fig. 5 : eine Ansicht ähnlich der Fig. 4, in welcher die Magazin-Schubachse um eine Zahnteilung t in Richtung auf den Füllstutzen verschoben ist, und in dieser Lage sich das vordere Ende 3″ der Füll-Schubachse noch oberhalb der Oberkante der Einmündung des Wechselmagazins in den Füllstutzen befindet,

Fig. 6 : eine Schnittansicht ähnlich den Fig. 4 und 5, in welcher die Magazin-Schubachse sich in der gleichen Lage der Fig. 5 befindet, hingegen die Füll-Schubachse mit ihrem vorderen Ende bis zur Austrittsöffnung des Füllstutzens verschoben ist,

Fig. 7 : eine den Schnittansichten der Fig. 4 bis 6 entsprechende Ansicht, in welcher die Magazin-Schubachse die gleiche Lage wie in den Fig. 5 und 6 einnimmt, hingegen die Füll-Schubachse in ihrer Extremlage aus der Austrittsöffnung des Füllstutzens herausgeschoben ist und dann der mechanische Vibrator automatisch in Tätigkeit gesetzt wird,

Fig. 8 : eine teilweise Schnittansicht durch die linke Hälfte der Fig. 1 mit einer als Schubhebel ausgebildeten Blattfeder,

EP 0 218 877 B1

Fig. 9 : einen teilweisen Schnitt durch die linke Hälfte des Gehäuses der Fig. 1 mit einem auf die Füll-Schubachse wirkenden Ultra-Schall-Vibrator,

Fig. 10 : eine teilweise Draufsicht in Richtung des Pfeiles X von Fig. 6 auf das von einem Nocken angehobene Hämmerchen mit einem Teil der Nockenscheibe sowie zweier als Verriegelung wirkenden Zahnleisten einer Trommel, die in Richtung des eingezeichneten Pfeiles dreht und

Fig. 11 : eine Draufsicht in Richtung XI von Fig. 7 bei auf das hintere Ende der Füll-Schubachse einwirkendem Hämmerchen.

Gemäß den Figuren besteht das neue Gerät 1 zur Füllung von Zahnkavitäten mit Füllstoffen aus folgenden je zweimal an einem gemeinsamen Gehäuse 2 spiegelsymmetrisch angeordneten Einzelteilen : Einer Füll-Schubachse 3, einer Magazin-Schubachse 4, einem leicht austauschbaren Wechselmagazin 5, einem fingerbetätigten Schiebeknopf 6, einem Schubhebel 7 und einem auf das Ende 3' der Füll-Schubachse 3 wirkenden Vibrator.

Die Füll-Schubachse 3 ist in einem Führungskanal 9 mittels des Schiebeknopfes 6 hin- und herbewegbar, wobei sich an den Führungskanal 9 ein Füllstutzen 10 mit auswechselbarem Stopferende 11 anschließt.

Das Wechselmagazin 5 mündet mit seinem vorderen Ende 5' in den Füllstutzen 10, in dem es unter Wirkung einer Feder 12 an ihrem anderen Ende 5" hineingedrückt und während der Arbeitsphase des Gerätes gehalten wird. Zwischen dem Wechselmagazin 5 und der Feder 12 ist gleitverschieblich ein zylindrischer Kulissenstein 13 angeordnet, der an seinem dem Wechselmagazin 5 zugekehrten Ende eine entsprechend konfigurierte Fläche aufweist. Die Magazin-Schubachse 4 ist in ihrer rückwärtigen Verlängerung mit einer Zahnstange 14 versehen. Diese Zahnstange 14 gehört gemeinsam mit dem Schubhebel 7 zu einem Getriebe, welches die Bewegungen der Füll- und der Magazin-Schubachse 3, 4 zueinander koordiniert und mitteinander koppelt, wenn die Füll-Schubachse 3 einen oberhalb der Einmündung 15 des Wechselmagazins 5 beginnenden und am Ausgang 16 des Füllstutzens 10 endenden Arbeitshub H durchführt.

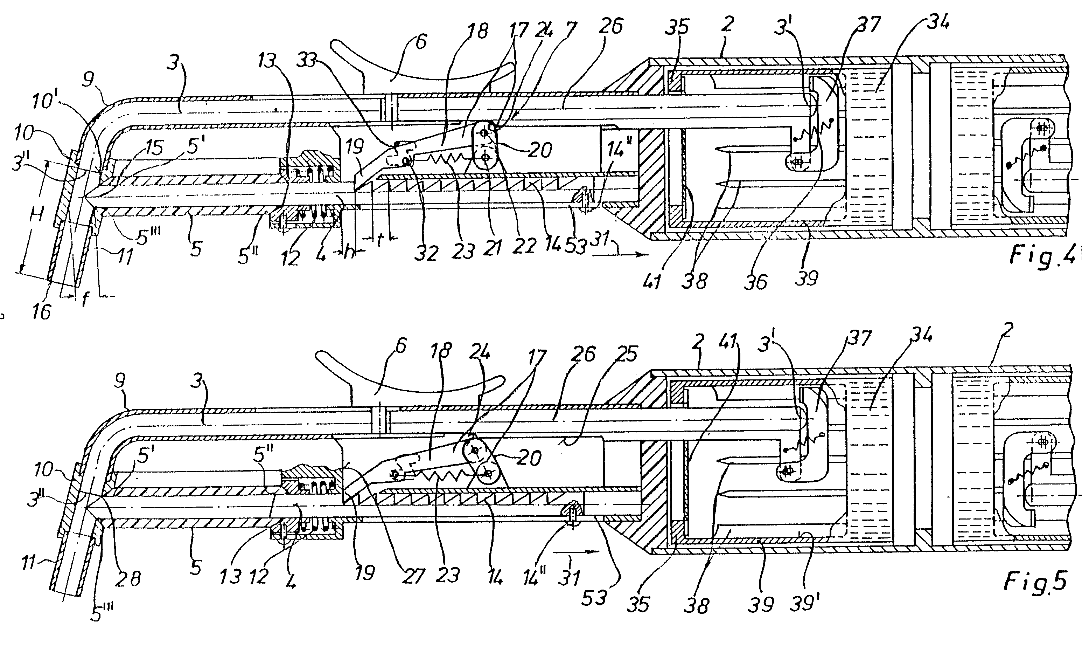

Dieses Getriebe besteht nach einer ersten Ausführungsalternative gemäß den Fig. 4 bis 7 aus einer summarisch mit 17 bezeichneten Schubkurbel, deren Schubstangenhebel 18 mit seinem freien Ende 19 in die Zahnstange 14 eingreift und deren Kurbelhebel 20 mit einem Gelenk 21 am Gehäuse 2 schwenkbeweglich angelenkt ist. Der Schubstangenhebel 18 und der Kurbelhebel 20 sind miteinander durch das Gelenk 22 verbunden. Von einer Rückholfeder 23, die mit einem Ende an dem Schubstangenhebel 18 und mit ihrem anderen Ende in der Nähe des Gelenkes 21 am Gehäuse 2 angreift, wird der Schubstangenhebel 18 und/oder der Kurbelhebel 20 gegen einen Vorsprung 24 der Füll-Schubachse 3 gedrückt. Dieser Vorsprung 24 kann auch anders als in den Fig. dargestellt ausgebildet sein, muß jedoch in jedem Fall mit der Füll-Schubachse 3 fest verbunden sein.

Beim Vorschub des Schiebeknopfes 6 aus der in Fig. 4 in die in Fig. 5 dargestellte Lage drückt der Vorsprung 24 in der Nähe des Gelenkes 22 gegen den Schubstangenhebel 18 und/oder den Kurbelhebel 20, wodurch das vordere Ende 19 des Schubstangenhebels 18 die Zahnstange 14 und damit die Magazin-Schubachse 4 soweit vorschiebt, bis der Vorsprung 24 über die Angriffsstelle an den beiden vorgenannten Hebeln 18, 20 hinweggleitet. Da sich an den Vorsprung 24 auf der Füll-Schubachse 3 eine Leiste 25 in gleichbleibendem Abstand von der Symmetrieachse 26 der Füll-Schubachse 3 anschließt, verbleibt die Schubkurbel 17 beim weiteren Vorschub der Füll-Schubachse 3 in der in Fig. 5 dargestellten Lage, in welcher — rein zufällig — das vordere Ende 19 des Schubstangenhebels 18 gegen einen Anschlag 27 des Gehäuses 2 fährt. Dadurch hat die Magazin-Schubachse 4 einen Arbeitshub h durchgeführt, der im vorliegenden Fall etwa der Strecke f im Füllstutzen 10 entspricht und ca. gleich einer Zahnteilung t ist. Auf diese Weise wird das im Wechselmagazin 5 befindliche Amalgam bei seinem Austritt aus dem Ende 5' des Wechselmagazins 5 nicht vorkondensiert sondern von der vorrückenden Füll-Schubachse 3 von der restlichen im Wechselmagazin 5 befindlichen Amalgamsäule abgeschert. Dieser Abscherungsvorgang beginnt in der Arbeitsphase der Fig. 5 in der Nähe der Oberkante 10' des Füllstutzens 10 und endet etwa in der Nähe der Unterkante 5''' des Wechselmagazins 5.

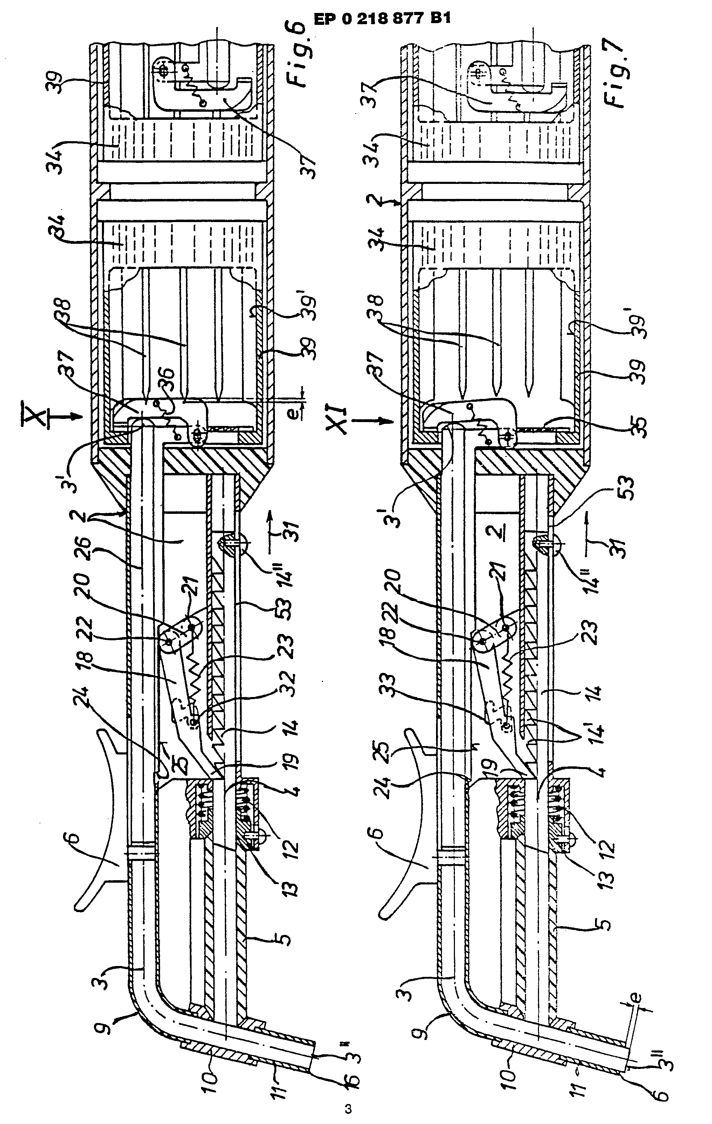

Beim weiteren Vorschub der Füll-Schubachse 3 aus seiner in Fig. 5 in seine in Fig. 6 dargestellte Lage wird die zuvor im Füllstutzen 10 abgescherte Amalgamportion aus dem auswechselbaren Stopferendell in die Zahnkavität befördert und kann dort kondensiert werden.

Wird die Füll-Schubachse 3 durch den Schiebeknopf 6 aus ihrer in Fig. 6 in ihre in Fig. 7 dargestellte Extremlage um eine geringe Strecke e weiter verschoben, wird der auf das Ende 3" der Füll-Schubachse 3 wirkende Vibrator ausgelöst, der noch an anderer Stelle näher beschrieben wird. Wie aus den Figuren 5 bis 7 hervorgeht, ändert die Schubkurbel 17 ihre Lage in diesen drei Arbeitsphasen nicht. Demzufolge verbleibt auch die Magazin-Schubachse 4 unverändert in ihrer Lage, da die Schubkurbel 17 von der Leiste 25 niedergehalten und somit an einer rückführenden Bewegung gehindert wird. Erst wenn der Schiebeknopf 6 aus seiner in den Fig. 5 bis 7 dargestellten Lage in mindestens die in Fig. 4 dargestellte Lage zurückgeschoben wird und die Wirkung des Vorsprunges 24 und der sich daran anschließenden Leiste 25 nachläßt bzw. aufgehoben wird, kann die gespannte Feder 23 den Schubstangenhebel 18 in seine in Fig. 4 dargestellte Lage zurückziehen, wodurch er um mindestens eine Zahnteilung t in Richtung des Kurbelhebels 20 zurückgezogen wird und sein freies Ende 19 wiederum in eine folgende Zahnlücke 14' der Zahnstange 14 einrückt.

Sodann kann der Schiebeknopf 6 erneut gemäß den vorgeschilderten Phasenbildern der Fig. 5, 6 und

5

7 nach vorn geschoben werden, wodurch auch die Magazin-Schubachse 4 wiederum eine weitere Amalgamportion in den Füllstutzen 10 schiebt, in dem sie abgeschert und von der Füll-Schubachse auf ihrem weiteren Weg in die Zahnkavität transportiert und in der Extremlage der Fig. 7 mittels des noch zu beschreibenden Vibrators verdichtet wird.

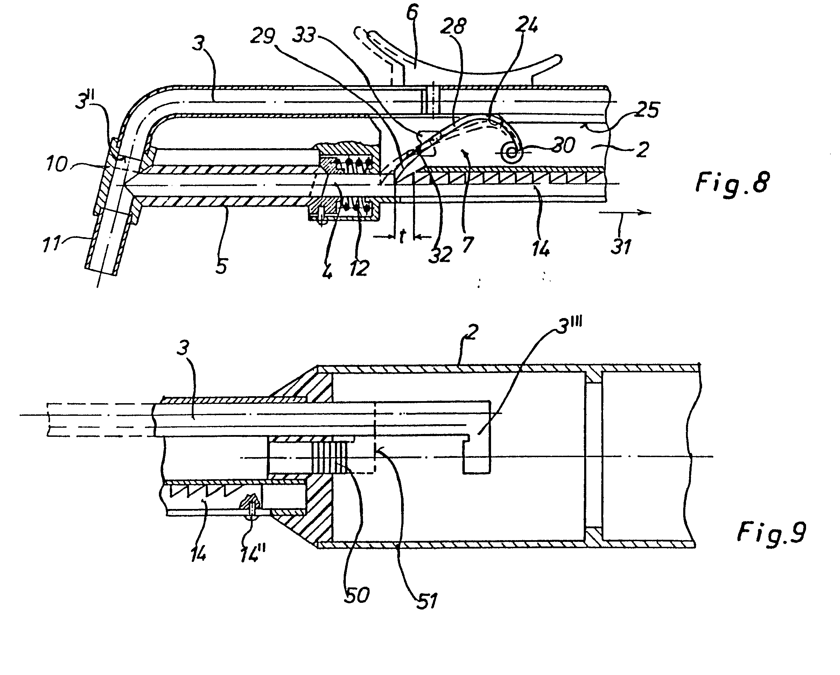

Eine weitere Ausführungsform des Schubhebels 7 ist in Fig. 8 dargestellt. In dieser Ausführungsform besteht der Schubhebel 7 aus einer Blattfeder 28, die mit ihrem einen Ende 30 am Gehäuse 2 unbeweglich befestigt ist, mit ihrem freien Ende 29 in die Zahnstange 14 eingreift, unter Wirkung des Vorsprunges 24 der Füll-Schubachse 3 die Zahnstange 14 verschiebt und bei Nachlassen bzw. Aufhebung der Wirkung des Vorsprunges 24 — wie an Hand der Fig. 5 bis 7 beschrieben — mit ihrem freien Ende 29 unter Wirkung ihrer Eigenspannung um mindestens eine Zahnteilung t in ihre Ausgangslage zurückfedert. Dabei ist in Fig. 8 die Ausgangslage mit durchgezogenen Linien und die unter Wirkung des Vorsprunges 24 und der sich daran anschließenden Leiste 25 veränderte sowie unter eine Vorspannung gesetzte Lage mit gestrichelten Linien dargestellt ist.

Um die Zahnstange 14 zum Austauschen des Wechselmagazins 5 in Richtung des Pfeiles 31 zurückziehen zu können, muß in den Ausführungsformen der Fig. 4 bis 7 der Schubstangenhebel 18 und in der Ausführungsform der Fig. 8 die Blattfeder 28 aus der Zahnstange 14 ausgerückt werden. Dies geschieht dadurch, daß sowohl der Schubstangenhebel 18 als auch die Blattfeder 28 einen Rastvorsprung 32 aufweisen, der durch eine im wesentlichen Z-förmige Öffnung des Gehäuses 2 greift und über den von außen mittels eines Fingers der Schubstangenhebel 18 einerseits und die Blattfeder 28 andererseits aus der Verzahnung der Zahnstange 14 ausrastbar sind.

Diese Ausrastmöglichkeit muß auch deshalb jederzeit gegeben sein, damit bei vorzeitigem Rückholen des Schiebeknopfes 6 vor dem Abscheren der Amalgamportionen ein wiederholter Amalgamvorschub der Magazin-Schubachse 4 unterbunden werden kann. Hiernach wird das Wechselmagazin 5 entgegen der Kraft der Feder 12 in Richtung des Pfeiles 31 verschoben, worauf das vordere Ende 5' aus dem Füllstutzen 10 nach unten ausgeklinkt und sodann das hintere Ende 5'' aus dem zylindrischen Kulissenstein 13 herausgezogen werden kann. Danach wird das neue, gefüllte Wechselmagazin 5 in umgekehrter Reihenfolge wieder eingesetzt und sodann entweder der Schubstangenhebel 18 oder die Blattfeder 28 mittels des Rastvorsprunges 32 wieder mit der Verzahnung der Zahnstange 14 in Eingriff gebracht.

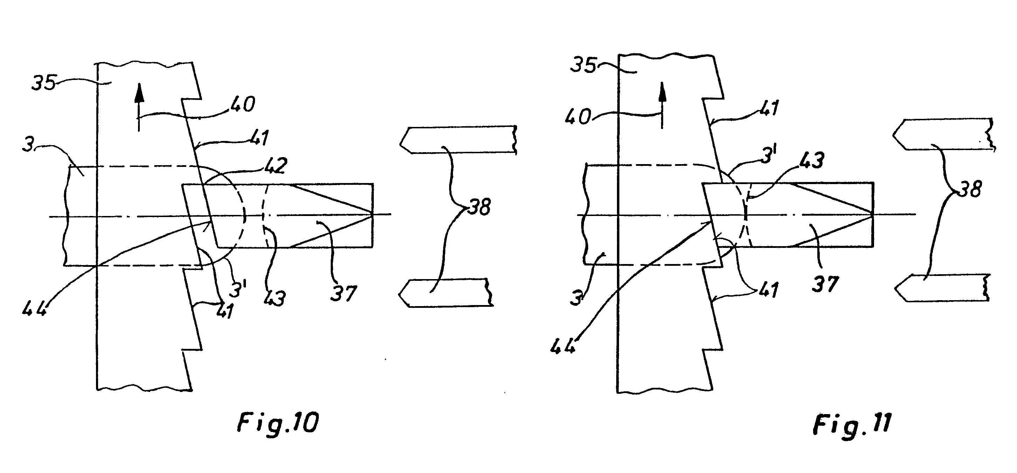

Nach einer ersten Ausführungsform besteht der in den Fig. 4 bis 7 und im Detail in den Fig. 10 und 11 dargestellte Vibrator aus einem per Hand aufziehbaren, von einer nicht dargestellten Antriebsfeder antreibbaren Federmotor 34, einer von diesem in Drehungen versetzbaren Nockenscheibe 35 und einem mit letzterer in Eingriff befindlichen, unter Wirkung einer Rückholfeder 36 gegen das Ende 3' der Füll-Schubachse 3 anliegenden, daran 3' gelenkig befestigten Hämmerchen 37. In den Fig. 4 bis 6 wird das Hämmerchen 37 von einer Verriegelung an einer Einwirkung auf das Ende 3' der Füll-Schubachse 3 gehindert. Diese Verriegelung besteht aus Zahnleisten 38 am Innenmantel 39' einer Trommel 39, die an ihrem der Füll-Schubachse 3 zugekehrten Ende die Nockenscheibe 35 und an ihrem anderen Ende mit dem Federmotor 34 versehen ist.

Wird gemäß Fig. 7 die Füll-Schubachse 3 um die geringe Strecke e in ihre Extremlage weiter verschoben, rückt das Hämmerchen 37 zwischen zwei Zahnleisten 38 aus, wodurch die Trommel 39 aufgrund der Antriebswirkung der nicht dargestellten Antriebsfeder in Drehungen versetzt wird. Aufgrund dieser Drehungen der Trommel 39 dreht sich auch die an ihr befestigte Nockenscheibe 35, mit der sich wiederum das Hämmerchen 37 in Eingriff befindet. Dieser Vorgang ist am anschaulichsten aus den Fig. 10 und 11 ersichtlich. Das von der Rückholfeder 36 stets in Richtung auf das Ende 3' der Füll-Schubachse 3 gezogene Hämmerchen 37 gleitet bei einer Drehung der Nockenscheibe 35 in Richtung des Pfeiles 40 auf einer der Nockenflächen 41 in eine von dem Ende 3' der Füll-Schubachse 3 abgehobenen Lage gemäß Fig. 10, um im nächsten Moment gemäß Fig. 11 unter Wirkung der Rückholfeder 36 beim Überschreiten des Kulminationspunktes 42 gegen das Ende 3' der Füll-Schubachse 3 zu schlagen, welche diesen Impuls als starrer Körper auf ihre Spitze 3'' überträgt.

Hiernach wiederholt sich dieser Vorgang mit den darauf folgenden Nockenflächen 41, wodurch aufgrund der in kurzer Zeiteinheit erfolgenden Impulse an der Spitze 3'' der Füll-Schubachse 3 Vibrationen auf das in die Zahnkavität ausgetragene Füllungsmaterial ausgeübt werden.

Dabei ist in den Fig. 10 und 11 die eigentliche Hammerfläche, die aufgrund der Draufsichten nur gestrichelt erkennbar ist, mit der Bezugsziffer 43 und die mit der Nockenscheibe 35 und den einzelnen Nockenflächen 41 in Eingriff befindliche Nockenfläche des Hämmerchens 37 mit der Bezugsziffer 44 versehen.

Der Federmotor 34 ist grundsätzlich per Hand aufziehbar. Dies erfolgt gemäß den Fig. 2 und 3 dadurch, daß die Antriebsfeder über einen am Außenmantel 45 des Gehäuses 2 ergonomisch anliegenden sowie davon abklappbaren Ring 46 mittels des Fingers 47 einer Hand in Richtung des Pfeiles 48 abgeklappt und hiernach der Ring 46 in Richtung des Pfeiles 49 gezogen wird. Danach rollt sich der Federzug selbsttätig ein und der Ring 46 kann sodann wiederum entgegen der Richtung des Pfeiles 48 an den Außenmantel 45 des Gehäuses 2 angeklappt werden.

Diese Ausführungsform hat den besonderen Vorteil, daß sie von jeglicher Außenenergiequelle völlig unabhängig ist und somit auch dieses Stopfgerät für eine Zahnbehandlung an Orten geeignet ist, an denen sich keine Anschlußmöglichkeit an eine Energiequelle befindet.

6

In Fig. 9 ist eine weitere Ausführungsform eines Vibrators dargestellt, der in diesem Fall aus einem Ultra-Schall-Vibrator 50 besteht, der immer dann selbsttätig ausgelöst wird, wenn das in diesem Fall hakenförmig ausgebildete Ende 3‴ der Füll-Schubachse 3 in der Extremlage der Spitze 3″ der Füll-Schubachse 3 gegen die gestrichelte Resonatorfläche 51 des Vibrators 50 geschoben wird und die Kopplung per Fingerdruck über den am Schiebeknopf 6 angreifenden Finger des Zahnarztes erfolgt.

Um die Handhabung des Schiebeknopfes 6 in beiden Richtungen einwandfrei zu gewährleisten, ist er mit einer dem Zeigefinger einer Bedienungsperson ergonomisch angepaßten Fläche 6′ versehen und an der der Magazin-Schubachse 4 abgewandten Seite 52 der Füll-Schubachse 3 angeordnet.

Um auch die Zahnstange 14 und mit ihr die Magazin-Schubachse 4 bequem zurückziehen zu können, ist die Zahnstange 14 an ihrem rückwärtigen Ende mit einem gleichfalls ergonomisch günstig gestalteten Schiebeknopf 14″ versehen, der mittels eines Stiftes durch einen Längsschlitz 53 im Gehäuse 2 hindurchgreift und lösbar mit der Zahnstange 14 verbunden ist.

Um das Gerät 1 vollständig reinigen und in stets hygienisch einwandfreiem Zustand benutzen zu können, ist es vorteilhaft insgesamt aus Metall und/oder geeigneten, hochtemperaturfesten Kunststoffen hergestellt, um in einem Autoklaven sterilisiert zu werden.

Es versteht sich, daß das neue Gerät auch ohne einen Vibrator 8 verwendet werden kann. In diesem Fall wird beispielsweise das abkuppelbare Gehäuse 2 mit dem Federmotor 34 oder dem Ultra-Schall-Vibrator 50 gegen ein Leergehäuse ausgetauscht. Dadurch können die ergonomische Länge und auch die sonstigen Abmessungen des Gerätes 1 beibehalten werden.

Bezugszeichenliste

| | |
|---|---|
| Gerät | 1 |
| Gehäuse | 2 |
| Füll-Schubachse | 3 |
| hinteres Ende der Füll-Schubachse | 3′ |
| vorderes Ende der Füll-Schubachse | 3″ |
| hakenförmig gebogenes Ende | 3‴ |
| Magazin-Schubachse | 4 |
| austauschbares Wechselmagazin | 5 |
| vorderes Ende des Wechselmagazins | 5′ |
| hinteres Ende des Wechselmagazins | 5″ |
| Unterkante des Wechselmagazins | 5‴ |
| Schiebeknopf | 6 |
| Schubhebel | 7 |
| Führungskanal | 9 |
| Füllstutzen | 10 |
| Oberkante des Füllstutzens | 10′ |
| Stopferende des Füllstutzens | 11 |
| Feder | 12 |
| zylindrischer Kulissenstein | 13 |
| Zahnstange | 14 |
| Zahnlücke | 14′ |
| Schiebeknopf der Zahnstange | 14″ |
| Einmündung in das Wechselmagazin | 15 |
| Ausgang des Füllstutzens 10 | 16 |
| Schubkurbel | 17 |
| Schubstangenhebel | 18 |
| freies Ende Schubstangenhebel | 19 |
| Kurbelhebel | 20 |
| Gelenk am Gehäuse 2 | 21 |
| Gelenk zwischen Kurbelhebel und Schubstangenhebel | 22 |
| Rückholfeder | 23 |
| Vorsprung der Füll-Schubachse | 24 |
| Leiste auf der Füll-Schubachse | 25 |
| Symmetrieachse der Füll-Schubachse | 26 |
| Anschlag am Gehäuse 2 | 27 |
| Blattfeder | 28 |
| Enden der Blattfeder 28 | 29, 30 |
| Richtungspfeile | 31, 40, 48, 49 |
| Rastvorsprung | 32 |
| Federmotor | 34 |
| Nockenscheibe | 35 |
| Rückholfeder | 36 |
| Hämmerchen | 37 |

| | |
|---|---|
| Zahnleisten | 38 |
| Trommel | 39 |
| Innenmantel der Trommel | 39' |
| Nockenflächen | 41 |
| Kulminationspunkt | 42 |
| Hammerfläche | 43 |
| Nockenfläche des Hämmerchens | 44 |
| Außenmantel des Gehäuses 2 | 45 |
| abklappbarer Ring | 46 |
| Finger | 47 |
| Ultra-Schall-Vibrator | 50 |
| Resonatorfläche | 51 |
| von Magazin-Schubachse 4 abgewandte Seite der Füll-Schubachse 3 | 52 |
| Längsschlitz am Gehäuse 2 | 53 |
| Zahnteilung | t |
| Arbeitshub von Füll-Schubachse 3 | H |
| Arbeitshub von Magazin-Schubachse 4 | h |
| Schubstrecke zur Auslösung des Vibrators 8 | e |

**Patentansprüche**

1. Gerät zur Füllung von Zahnkavitäten mit Füllstoffen, z. B. mit Amalgam, welches einen Füllstutzen und eine in einem Führungskanal hin- und herzubewegende, in den Füllstutzen übergehende Füll-Schubachse sowie ein quer zum Füllstutzen angeordnetes, in ihn einmündendes sowie herausnehmbares Wechselmagazin aufweist, aus dem über eine in einem zweiten Führungskanal geführte Magazin-Schubachse zu Beginn des oberhalb der Einmündung des Wechselmagazins beginnenden und am Ausgang des Füllstutzens endenden Arbeitshubes der Füll-Schubachse ein Teil des Füllstoffes in den Füllstutzen zu drücken ist, wobei die von einem gemeinsamen Gehäuse umgebene Füll- und Magazin-Schubachse durch ein ihre Bewegung zueinander koordinierendes, mechanisches Getriebe miteinander gekoppelt sind, zu dem eine mit der Magazin-Schubachse verbundene Zahnstange gehört, dadurch gekennzeichnet, daß das mechanische Getriebe aus einem an dem Gehäuse (2) schwenkbeweglich angelenkten Schubhebel (7) besteht, der mit seinem freien Ende (19, 29) unter Federvorspannung in die Zahnstange (14) eingreift und diese während eines Arbeitshubes (H) über einen mit der Füll-Schubachse (3) verbundenen, fingerbetätigten Schiebeknopf (6) und einen Vorsprung (24) der Füll-Schubachse (3) in Richtung auf den Füllstutzen (10) verschiebt, bevor das vordere Ende (3") der Füll-Schubachse (3) die Oberkante (28) der Einmündung (15) des Wechselmagazins (5) in den Füllstutzen (10) erreicht.

2. Gerät nach Anspruch 1, dadurch gekennzeichnet, daß der Schubhebel (7) während eines Arbeitshubes (H) der Füll-Schubachse (3) die Magazin-Schubachse (4) um eine Strecke (h) verschiebt, die dem Durchmesser (f) des Füllstutzens (10) entspricht, der wiederum etwa gleich einer oder etwa gleich einem ganzzahligen Vielfachen der Zahnteilung (t) der Zahnstange (14) ist.

3. Gerät nach Anspruch 1 oder 2, dadurch gekennzeichnet, daß der Schubhebel (7) aus einer Schubkurbel (17) besteht, deren Schubstangenhebel (18) mit seinem freien Ende (19) in die Zahnstange (14) eingreift und deren Kurbelhebel (20) am Gehäuse (2) schwenkbeweglich angelenkt ist, wobei der Vorsprung (24) der Füll-Schubachse (3) in der Nähe eines die beiden Hebel (18, 20) verbindenden Gelenkes (22) am Kurbelhebel (20) und/oder am Schubstangenhebel (78) angreift.

4. Gerät nach Anspruch 3, dadurch gekennzeichnet, daß der Schubstangenhebel (18) unter der Wirkung einer Rückholfeder (23) steht, die ihn bei Nachlassen bzw. bei Aufhebung der Wirkung des Vorsprunges (24) der Füll-Schubachse (3) um mindestens eine Zahnteilung (t) in Richtung des Kurbelhebels (20) zurückzieht und sein freies Ende (19) wiederum in eine Zahnlücke (14') der Zahnstange (14) einrückt.

5. Gerät nach Anspruch 1 oder 2, dadurch gekennzeichnet, daß der Schubhebel (7) aus einer Blattfeder (28) besteht, die mit ihrem einen Ende (30) am Gehäuse (2) unbeweglich befestigt ist, mit ihrem freien Ende (29) in die Zahnstange (14) eingreift, unter Wirkung des Vorsprunges (24) der Füll-Schubachse (3) die Zahnstange (14) verschiebt und bei Nachlassen bzw. Aufhebung der Wirkung des Vorsprunges (24) mit ihrem freien Ende (29) unter Wirkung ihrer Eigenspannung um mindestens eine Zahnteilung (t) in ihre Ausgangslage zurückfedert.

6. Gerät nach einem oder mehreren der Ansprüche 1 bis 5, dadurch gekennzeichnet, daß der Schubhebel (7, 18, 28) einen Rastvorsprung (32) aufweist, der durch eine im wesentlichen Z-förmige Öffnung (33) des Gehäuses (2) greift und über den der Schubhebel (7, 18, 28) bei zurückgezogener Füll-Schubachse (3) aus der Verzahnung der Zahnstange (14) ausrastbar ist.

7. Gerät nach einem oder mehreren der Ansprüche 1 bis 6, dadurch gekennzeichnet, daß das vordere Ende (3") der Füll-Schubachse (3) am Ende ihres Arbeitshubes (H) über den Schiebeknopf (6) um eine geringe Strecke (e) in eine Extremlage weiter verschiebbar ist, in welcher selbsttätig ein auf das hintere Ende (3') der Füll-Schubachse (3) wirkender Vibrator (8) auslösbar ist.

8. Gerät nach einem oder mehreren der Ansprüche 1 bis 7, dadurch gekennzeichnet, daß der Vibrator (8) aus einem von einer per Hand aufziehbaren Antriebsfeder antreibbaren Federmotor (34), einer von diesem (34) in Drehungen versetzbaren Nockenscheibe (35) und einem mit letzterer in Eingriff befindlichen, unter Wirkung einer Rückholfeder (36) gegen das Ende (3') der Füll-Schubachse (3) anliegenden, daran (3') gelenkig befestigten Hämmerchen (37) besteht, welches in der Extremlage der Füll-Schubachse (3) aus einer Verriegelung (38) ausrückbar ist.

9. Gerät nach Anspruch 8, dadurch gekennzeichnet, daß die Verriegelung aus Zahnleisten (38) am Innenmantel (39') einer Trommel (39) besteht, die an ihrem der Füll-Schubachse (3) zugekehrten Ende die Nockenscheibe (35) aufweist und an ihrem anderen Ende mit dem Federmotor (34) versehen ist.

10. Gerät nach einem oder mehreren der Ansprüche 7 bis 9, dadurch gekennzeichnet, daß die Antriebsfeder des Federmotors (34) mittels eines am Außenmantel (45) des Gehäuses (2) ergonomisch anliegenden sowie davon abklappbaren Ringes (46) über eine mittels eines Federwerkes selbsttätig aufrollbare Schnur aufziehbar ist.

11. Gerät nach einem oder mehreren der Ansprüche 1 bis 7, dadurch gekennzeichnet, daß der Vibrator (8) aus einem von einer elektrischen Stromquelle gespeisten Ultra-Schall-Vibrator (50) besteht, der bei Kontakt mit einem hakenförmig gebogenen Ende (3''') der Füll-Schubachse (3) an seiner Vibratorfläche (51) auslösbar ist.

12. Gerät nach einem oder mehreren der Ansprüche 1 bis 11, dadurch gekennzeichnet, daß das Gerät (1) spiegelsymmetrisch mit zwei voneinander getrennten unterschiedlich kalibrierten Füll- und Magazin-Schubachsen (3, 4) versehen ist, die an einem gemeinsamen Gehäuse (2) angeordnet sind.

13. Gerät nach einem oder mehreren der Ansprüche 1 bis 12, dadurch gekennzeichnet, daß der Schiebeknopf (6) eine dem Zeigefinder einer Bedienungsperson ergonomisch angepaßte Fläche (6') zum Vor- und Rückschub der Füll-Schubachse (3) aufweist und an der von der Magazin-Schubachse (4) abgewandten Seite (52) der Füll-Schubachse (3) angeordnet ist.

14. Gerät nach einem oder mehreren der Ansprüche 1 bis 13, dadurch gekennzeichnet, daß das Gerät (1) aus Metall oder einem Tetrafluoräthylen besteht und insgesamt in einem Autoklaven sterilisierbar ist.

## Claims

1. Implement for filling dental cavities with fillers, e. g. with amalgam, which includes a filling nozzle and a feed shaft reciprocably-moving in a guide channel and extending into the filling nozzle, as well as a removable change magazine arranged transversely of the filling nozzle and discharging into it, from which by means of a magazine shaft guided in a second guide channel a part of the filler is forced into the filling nozzle at the beginning of the operative stroke of the feed shaft beginning above the inlet into the change magazine and ending at the outlet of the filling nozzle, wherein the feed and magazine shafts surrounded by a common housing are coupled together by a mechanical drive co-ordinating their movement together, with which is associated a gear rack connected with the magazine shaft, characterised in that the mechanical drive consists of a thrust lever (7) pivotably linked to the housing (2), which engages with its free end (19, 29) in the gear rack (14) under spring pre-tension and moves this during an operative stroke (H) by way of a finger-actuated slider knob (6) connected with the feed shaft (3) and moves a projection (24) on the feed shaft (3) in the direction towards the filling nozzle (10) before the forward end (3'') of the feed shaft (3) attains the upper edge (28) of the outlet (15) of the change magazine (5) in the filling nozzle (10).

2. Implement according to claim 1, characterised in that, during an operative stroke (H) of the feed shaft (3), the thrust lever (7) moves the magazine shaft (4) by an extent (h) which corresponds to the diameter (f) of the filling nozzle (10), which is approximately equal to one or an integral number of the tooth divisions (t) of the gear rack (14).

3. Implement according to claim 1 or 2, characterised in that the thrust lever (7) consists of a thrust crank (17) whose link lever (18) engages with its free end (19) in the gear rack (14) and whose crank lever (20) is pivotably linked to the housing (2), wherein the projection (24) on the feed shaft (3) engages the crank lever (20) and/or the link lever (18) in the vicinity of a link member (22) connecting the two levers (18, 20).

4. Implement according to claim 3, characterised in that the link lever (18) is under the action of a return spring (23), which withdraws it, after release or cessation of the action of the projection (24) on the feed shaft (3), by at least a tooth division (t) in the direction of the crank lever (20) and again urges its free end (19) into a tooth gap (14') of the gear rack (14).

5. Implement according to claim 1 or 2, characterised in that the thrust lever (7) consists of a leaf spring (28), which is fixedly secured with its one end (30) to the housing (2) and engages with its free end (29) in the gear rack (14), and moves the gear rack (14) under the action of the projection (24) on the feed shaft (3) and after release or cessation of the action of the projection (24), withdraws its free end (29) by at least one tooth division (t) into its starting position under the action of its own tension.

6. Implement according to one or more of claims 1 to 5, characterised in that the thrust lever (7, 18, 28) has a drive projection (32) which engages through an essentially Z-shaped aperture (33) in the housing (2) and by means of which the thrust lever (7, 18, 28) with the feed shaft (3) withdrawn, is disengageable from the teeth of the gear rack (14).

7. Implement according to one or more of claims 1 to 6, characterised in that, at the end of its operative stroke (H), the forward end (3″) of the feed shaft (3) is movable by means of the shift head (6) by a small extent (e) into an extreme position, in which a vibrator (8) acting on the rear end (3′) of the feed shaft (3) is automatically actuatable.

8. Implement according to one or more of claims 1 to 7, characterised in that the vibrator (8) consists of a spring motor (34) operable by means of a driving spring withdrawable by hand, a cam disc (35) capable of being set in rotation by this (34) and a hammer (37) in engagement with the latter and disposed under the action of a return spring (36) against the end (3′) of the feed shaft (3) and pivotably secured thereto (3′), which is disengageable from a locking mechanism in the extreme position of the feed shaft (3).

9. Implement according to claim 8, characterised in that the locking mechanism consists of gear ribs (38) on the interior (39′) of a drum (39), which is provided with the cam disc (35) on its end opposite the feed shaft (3) and has the spring motor (34) at its other end.

10. Implement according to one or more of claims 7 to 9, characterised in that the driving spring of the spring motor (34) is withdrawable by means of a ring (46) ergonomically-locatable on the outer cover (45) of the housing (2) and foldable thereover, by means of a cord automatically rewindable by means of a spring mechanism.

11. Implement according to one or more of claims 1 to 7, characterised in that the vibrator (8) consists of an ultrasound vibrator (50) actuated from an electric current source, which is actuatable on contact of its vibrator surface (51) with a hook-shaped bent end (3‴) of the feed shaft (3).

12. Implement according to one or more of claims 1 to 11, characterised in that the implement (1) is provided in mirror symmetry with two mutually-separated calibrated feed and magazine shafts (3, 4), which are arranged on a common housing (2).

13. Implement according to one or more of claims 1 to 12, characterised in that the slider knob (6) has a surface (6′) for forward and return movement of the feed shaft (3) adapted ergonomically to the index finger of an operator and is arranged on the side (52) of the feed shaft (3) away from the magazine shaft (4).

14. Implement according to one or more of claims 1 to 13, characterised in that the implement (1) consists of metal or a tetrafluoroethylene and is totally sterilisable in an autoclave.

**Revendications**

1. Appareil pour le remplissage de cavités dentaires au moyen de matières de remplissage, par exemple au moyen d'amalgames, qui comporte une tubulure de remplissage et un axe de poussée et de remplissage, qui se déplace dans les deux sens dans un conduit de guidage et va jusque dans la tubulure de remplissage, ainsi qu'un magasin de remplacement amovible, qui est orienté transversalement par rapport à la tubulure de remplissage, dans laquelle il débouche, et à partir duquel un axe de poussée associé au magasin et guidé dans un deuxième conduit de guidage pousse dans la tubulure de remplissage une partie des matières de remplissage au début de la course de travail de l'axe de remplissage, course qui commence au-dessus de l'orifice par lequel débouche le magasin de remplacement et se termine à la sortie de la tubulure de remplissage, l'axe de poussée et de remplissage et l'axe de poussée associé au magasin, qui sont entourés par une enveloppe commune, étant accouplés l'un à l'autre par un dispositif mécanique qui coordonne leurs déplacements et qui comprend une crémaillère reliée à l'axe de poussée associé au magasin, caractérisé en ce que le dispositif mécanique est constitué par un levier de poussée (7) qui s'articule sur l'enveloppe (2) de manière à pouvoir pivoter et qui est en prise, par son extrémité libre (19, 29), sous l'action d'une précontrainte due à un ressort, avec la crémaillère (14) et, pendant une course de travail (H) sous l'action d'un bouton-poussoir (6), relié à l'axe de poussée et de remplissage (3) et commandé par la pression d'un doigt, et d'une partie saillante (24) de l'axe de poussée et de remplissage, pousse la crémaillère dans la direction de la tubulure de remplissage 10 avant que l'extrémité avant (3″) de l'axe de poussée et de remplissage (3) atteigne le bord supérieur (28) de l'orifice (15) par lequel le magasin de remplacement (5) débouche dans la tubulure de remplissage (10).

2. Appareil selon la revendication 1, caractérisé en ce que, pendant la course de travail (H) de l'axe de poussée et de remplissage (3), le levier de poussée (7) déplace l'axe de poussée (4) associé au magasin sur une distance égale au diamètre (f) de la tubulure de remplissage ou à un multiple entier d'une subdivision (t) de la crémaillère (14) correspondant à une dent.

3. Appareil selon l'une des revendications 1 ou 2, caractérisé en ce que le levier de poussée (7) est constitué par une manivelle de poussée (18) dont le levier de bielle de poussée (18) est en prise, par son extrémité libre (19), avec la crémaillère (14) et dont le levier de manivelle (20) s'articule sur l'enveloppe (2) de manière à pouvoir pivoter, la partie saillante (24) de l'axe de poussée et de remplissage (3) étant en prise, à proximité d'une articulation (22) reliant les deux leviers (18, 20), avec le levier de manivelle (20) et/ou le levier de bielle de poussée (18).

4. Appareil selon la revendication 3, caractérisé en ce que le levier de bielle de poussée (18) est soumis à l'action d'un ressort de rappel (23) qui, lorsque l'action de la partie saillante (24) de l'axe de poussée et de remplissage (3) devient moins importante ou cesse, le fait reculer d'au moins une subdivision (t) de crémaillère dans la direction du levier de manivelle (20) et engage de nouveau son extrémité libre (19) dans un évidement de dent (14') de la crémaillère (14).

5. Appareil selon l'une des revendications 1 ou 2, caractérisé en ce que le levier de poussée (7) est constitué par un ressort feuilleté (28) qui est fixé rigidement, par l'une de ses extrémités (30), à l'enveloppe (2), est en prise, par son extrémité libre (29), avec la crémaillère (14), déplace la crémaillère (14) sous l'action de la partie saillante (24) de l'axe de poussée et de remplissage (3) et, lorsque l'action de la partie saillante (24) devient moins importante ou cesse, la ramène élastiquement, par son extrémité libre (29), sous l'action de sa contrainte propre, d'au moins une subdivision (t) de la crémaillère, dans sa position de départ.

6. Appareil selon une ou plusieurs des revendications 1 à 5, caractérisé en ce que le levier de poussée (7, 18, 28) comporte une saillie d'arrêt (32) qui s'engage dans une ouverture (33) en forme de Z ménagée dans l'enveloppe (2) et qui, lorsque l'axe de poussée et de remplissage (3) recule, permet au levier de poussée (16, 18, 28) de se dégager des dents de la crémaillère (14).

7. Appareil selon une ou plusieurs des revendications 1 à 6, caractérisé en ce qu'à la fin de sa course de travail (H), l'extrémité avant (3") de l'axe de poussée et de remplissage (3) peut être déplacée sur une petite distance (e) au moyen du bouton-poussoir (6) jusque dans une position extrême dans laquelle un vibreur (8) qui agit sur l'extrémité arrière (3') de l'axe de poussée et de remplissage (3) peut se déclencher automatiquement.

8. Appareil selon une ou plusieurs des revendications 1 à 7, caractérisé en ce que le vibreur (8) est constitué par un moteur à ressort (34) qui peut être mis en action par un ressort qui peut être mis sous tension à la main, par un disque à cames (35) qui peut tourner sous l'action de ce moteur (30) et par un petit marteau (37) qui est en prise avec le disque, qui s'applique, sous l'action d'un ressort de rappel (36), contre l'extrémité (3') de l'axe de poussée et de remplissage (3) sur lequel il s'articule (3') et qui, lorsque l'axe de poussée et de remplissage (3) est dans sa position extrême, peut être dégagé d'un dispositif de verrouillage (38).

9. Appareil selon la revendication 8, caractérisé en ce que le dispositif de verrouillage est constitué par des dents (38) qui dépassent de la surface intérieure (39') d'un tambour (39) qui comporte à son extrémité située du côté de l'axe de poussée et de remplissage (3), le disque à cames (35) et, à son autre extrémité, le moteur à ressort (34).

10. Appareil selon une ou plusieurs des revendications 7 à 9, caractérisé en ce que le ressort d'entraînement du moteur à ressort (34) peut être mis sous tension au moyen d'un anneau (46) qui s'applique, dans des conditions facilitant le travail musculaire, contre le côté extérieur (45) de l'enveloppe (2) et peut s'en écarter sous l'action d'un cordon qui peut s'enrouler automatiquement au moyen d'un dispositif élastique.

11. Appareil selon une ou plusieurs des revendications 1 à 7, caractérisé en ce que le vibreur (8) est constitué par un vibreur à ultra-sons (50) qui est alimenté par une source de courant électrique et qui peut être déclenché lorsqu'une extrémité (3") de l'axe de poussée et de remplissage (3) incurvée en forme de crochet entre en contact avec la surface (51) du vibreur.

12. Appareil selon une ou plusieurs des revendications 1 à 11, caractérisé en ce que l'appareil (1) comporte deux axes de poussée et de remplissage (3, 4) séparés l'un de l'autre, de calibres différents, disposés symétriquement par rapport à un plan et montés dans une enveloppe commune (2).

13. Appareil selon une ou plusieurs des revendications 1 à 12, caractérisé en ce que le bouton-poussoir (6) comporte une surface (6') adaptée, de manière à faciliter le travail musculaire, au doigt d'un opérateur pour la poussée en avant et en arrière de l'axe de poussée et de remplissage (3) et se trouve du côté (52) de l'axe de poussée et de remplissage (3) qui est situé à l'opposé de l'axe de poussée (4) associé au magasin.

14. Appareil selon une ou plusieurs des revendications 1 à 13, caractérisé en ce que l'appareil (1) est en métal ou en tétrafluoréthylène et peut être entièrement stérilisé en autoclave.

Fig.1

Fig.3

Fig.2

EP 0 218 877 B1

Fig.4

Fig.5

Fig.6

Fig.7

EP 0 218 877 B1

Fig.8

Fig.9

Fig.11

Fig.10